**Europäisches Patentamt**

**European Patent Office**

**Office européen des brevets**

(19)

(11) Veröffentlichungsnummer : **0 387 189 B1**

(12) **EUROPÄISCHE PATENTSCHRIFT**

(45) Veröffentlichungstag der Patentschrift :
**16.12.92 Patentblatt 92/51**

(51) Int. Cl.$^5$ : **D03D 49/20, D03D 49/00**

(21) Anmeldenummer : **90810100.9**

(22) Anmeldetag : **14.02.90**

(54) **Webmaschine mit elastischem Riegelelement für das Warenbaumlager.**

(30) Priorität : **10.03.89 CH 909/89**

(43) Veröffentlichungstag der Anmeldung :
**12.09.90 Patentblatt 90/37**

(45) Bekanntmachung des Hinweises auf die
Patenterteilung :
**16.12.92 Patentblatt 92/51**

(84) Benannte Vertragsstaaten :
**BE DE FR IT**

(56) Entgegenhaltungen :
**DE-B- 1 098 457**
**US-A- 1 803 286**
**US-A- 3 532 137**
**US-A- 3 884 274**

(73) Patentinhaber : **GEBRÜDER SULZER
AKTIENGESELLSCHAFT
Zürcherstrasse 9
CH-8401 Winterthur (CH)**

(72) Erfinder : **Somm, Christoph
Pappelstrasse 12
CH-8305 Dietlikon (CH)**

EP 0 387 189 B1

## Beschreibung

Die Erfindung betrifft eine Webmaschine mit einem Warenbaum zum Aufwickeln des gewebten Tuches, wobei der Warenbaum Lagerzapfen aufweist, welche von Lagerschalen in Lagertischen der Webmaschine aufgenommen und durch je ein Riegelelement in den Lagerschalen gesichert sind.

Bei den meisten im Einsatz befindlichen Webmaschinen werden die Kettfäden auf sogenannten Kettbäumen aufgewickelt, zum Abweben an eine Webmaschine gebracht, wobei die Kettbäume beachtliche Dimensionen und eine grosse Masse aufweisen können. Auf der dem Kettbaum gegenüberliegenden Seite einer Webmaschine wird das gewebte Tuch auf einen Warenbaum aufgewickelt, der von Zeit zu Zeit aus der Webmaschine entnommen wird, wenn er seinen höchstzulässigen Durchmesser erreicht hat. Während des Abwebens eines Kettbaumes muss der Warenbaum in der Regel mehrmals gewechselt werden, wobei die Webmaschine möglichst nicht ausser Betrieb gesetzt werden soll.

Aus diesem Grund ist insbesondere der Lagerung des Warenbaumes erhebliche Beachtung zu schenken. Die Lagerung sollte zum einen so gestaltet sein, dass ein Herausgleiten des Lagerzapfens des Warenbaumes während des Aufwickelns des Tuches unmöglich ist. Auf der anderen Seite sollte eine schnelle Entnahme des Warenbaumes gewährleistet sein, da hierfür bei den bekannten Webmaschinen nur geringe Zeit zur Verfügung steht.

Beispielsweise ist in der US-PS 3 884 274 ein Warenbaumlager gezeigt, bei dem sich in Gebrauchslage eine Hülse für Lagerzapfen gegen einen Riegel abstützt. Dieser Riegel liegt auf einem Lagerbock auf, welcher durch eine Gewindespindel versetzbar ist. Durch Drehen der Gewindespindel wird über den Lagerbock der Riegel entweder angehoben oder abgesenkt. Dabei wird jedoch für das Drehen der Gewindespindel erhebliche Zeit benötigt und ferner wäre bei einer beabsichtigten automatischen Entnahme des Warenbaumes durch einen Roboter, wie er in der EP-A-0 296 115 gezeigt ist, unmöglich. Hier müssten separate Steuerungen zur Betätigung der Gewindestange vorgesehen werden.

Der Erfinder hat sich zur Aufgabe gestellt, eine Webmaschine der obengenannten Art zu entwickeln, bei der auf einfache Art und Weise ein Festlegen des Warenbaumes in seinem Lager möglich wird, wobei die Lösung dieser Festlegung vereinfacht ist und auch automatisch arbeitenden Entnahmevorrichtungen zugänglich sein soll.

Die Lösung dieser Aufgabe besteht darin, dass das Riegelelement aus einer Zunge mit einer Feder zur Anhebung der Zunge besteht, und dass die Zunge zwei Schenkel aufweist, wobei die Zunge am Ende eines Schenkels einerseits in einer schlitzförmigen Ausnehmung des Lagertisches gelagert ist, unter Bildung eines Knies bei der Lagerschale nach oben aus der Ausnehmung herausragt und vom Knie aus in den anderen Schenkel übergeht, der durch den Lagertisch nach unten verläuft und den Lagertisch mit einer Auflagefläche unterfängt.

Da die Zunge elastisch abgestützt ist erfolgt eine automatische Rückführung der Zunge in Riegelposition, so dass hierzu keine eigenen Stellelemente notwendig sind.

Bevorzugt soll der nach unten aus der Ausnehmung austretende Schenkel mit einem Hebel zum Entriegeln verbunden sein. In diesem Fall ist vor allem an eine nicht automatische, sondern manuelle Entriegelung gedacht. Bei einem Ausführungsbeispiel weist der Hebel mit dem Lagertisch einen Drehpunkt auf und greift den Schenkel auf der einen Seite mit einem Schwenkarm an. Der andere Teil des Hebels jenseits des Drehpunktes ist als Griff ausgebildet, wobei selbstverständlich auch entsprechende Arretierungsmöglichkeiten für den Griff in einer bestimmten gewünschten Lage denkbar sind.

Zur automatischen Entnahme des Warenbaumes soll jedoch der Zunge ein Finger zugeordnet sein, welcher die Zunge in die Ausnehmung drückt. Dies kann beispielsweise in Abhängigkeit von der Bewegung einer Entnahmevorrichtung für den Warenbaum geschehen, die in der EP-A-0 296 115 aufgezeigt ist. Hierzu ist dann der entsprechende Finger mit einem Greifer der Entnahmevorrichtung verbunden und wirkt in Abhängigkeit von der Bewegung dieser Entnahmevorrichtung auf die elastische Zunge ein. Die Einwirkung erfolgt dann, wenn die Greifvorrichtung bereits den Warenbaum umfasst, so dass der Warenbaum aus der Lagerschale direkt an die Entnahmevorrichtung übergeben wird.

Es ist jedoch auch denkbar, dass der Finger durch einen eigenen Antrieb gesteuert die Zunge angreift. Auch hier geschieht der Angriff wiederum dann, wenn die Entnahmevorrichtung bereits den Warenbaum fest im Griff hat.

Durch diese einfache Konstruktion wird die Entnahme des Warenbaumes beim laufenden Betrieb der Webmaschine wesentlich vereinfacht.

Zu erwähnen ist noch, dass das Einlegen eines neuen Warenbaumes dadurch erleichtert wird, dass der Lagerzapfen hinter die elastische Zunge einfach einzuklinken ist. Das Lager schliesst danach durch die Rückstellkraft der Zunge automatisch.

Sollte ein Rücklauf des Warenbaumes notwendig sein, so ergibt die erfindungsgemässe Warenbaumlagerung eine kraftschlüssige Halterung. Toleranzen können grob gewählt werden.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in

Fig. 1 eine schematische Darstellung eines Ausschnittes aus einer Webmaschine im Bereich der Warenbaumlagerung;

Fig. 2 eine schematische Darstellung des Ausschnittes entsprechend Fig. 1 in einer anderen Gebrauchslage;

Fig. 3 eine vergrösserte Darstellung der zusammengesetzten Elemente eines erfindungsgemässen Warenbaumlagers;

Fig. 4 eine schematische Darstellung einer Webmaschine im Bereich des Warenbaumlagers mit angreifender Entnahmevorrichtung

Fig. 5 ein teilweise gezeigtes Warenbaumlager entsprechend Fig. 4, jedoch in einer anderen Gebrauchslage,

Fig.6a,6b eine andere Ausführungsart der Erfindung und

Fig.7a,b,c eine Ausführungsart der Erfindung für Fussbetrieb.

Bei einer nicht näher gezeigten Webmaschine wird das gewebte Tuch 1 auf einen Warenbaum 2 aufgewickelt, der von Zeit zu Zeit aus der Webmaschine genommen wird, wenn das aufgewickelte Tuch 1 einen höchstzulässigen Durchmesser erreicht hat. Zum Aufwickeln des Tuches 1 auf den Warenbaum 2 ist letzterem ein Antriebsrad 3 zugeordnet, welches in Richtung z dreht.

Stirnseitig ragt aus dem Warenbaum 2 jeweils ein Lagerzapfen 4, welcher in Gebrauchslage in einer von einem Lagertisch 5 gebildeten Lagerschale 6 aufgenommen ist. Ein Herausgleiten des Lagerzapfens 4 aus der Lagerschale 6 verhindert eine elastische Zunge 7, welche in eine schlitzförmige Ausnehmung 8 des Lagertisches 5 eingesetzt ist. Die Zunge 7 ist einerseits fest mit dem Lagertisch 5 verbunden, wobei Befestigungselemente eine Bohrung 9 in der Zunge durchsetzen können. Von der Lagerung verläuft ein Schenkel 10 der Zunge 7 gebogen nach oben und bildet ein Knie 11, gegen welches sich der Lagerzapfen 4 abstützt. Anschliessend an das Knie verläuft ein zweiter Schenkel 12 durch den Lagertisch 5 nach unten und untergreift einen Teil des Lagertisches 5 mit einer Auflagefläche 13.

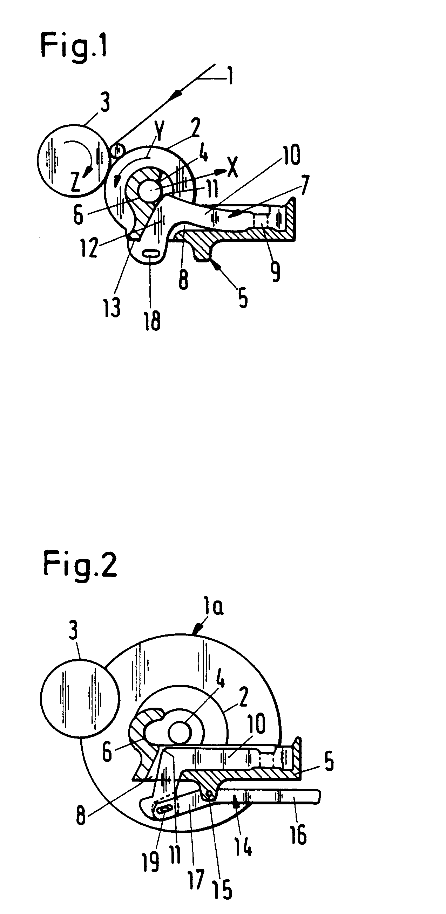

In Figur 1 ist das Warenbaumlager geschlossen. Wickelt der Warenbaum im Normalbetrieb Tuch 1 auf, so versucht der Lagerzapfen 4 in radialer Richtung x auszuweichen. Hierbei trifft er auf das Knie 11 der Zunge 7, wobei die Auflageflaeche 13 unter dem Lager ein Gegenmoment erzeugt. Dieser Verschluss wirkt für alle auftretenden statischen Belastungen formschlüssig. Der Drehsinn y des Warenbaumes 2 wird immer versuchen, durch Reib- und Formschluss die Zunge 7 in der Riegelposition zu halten.

Zum Entnehmen des Warenbaumes 2 mit aufgewickeltem Tuch 1a gemäss Figur 2 wird die elastische Zunge 7 bzw. der Schenkel 10 geradegebogen, so dass das Knie 11 in der Ausnehmung 8 verschwindet. Hierdurch kann der Lagerzapfen 4 aus der Lagerschale 6 gleiten.

Der Einfachheit halber geschieht diese Entriegelung mittels eines Hebels 14, welcher mit dem Lagertisch 5 einen Drehpunkt 15 bildet. Dieser Hebel 14 weist einerseits des Drehpunktes 15 einen Griff 16 und andererseits einen Schwenkarm 17 auf, welcher mit dem Schenkel 12 der Zunge 7 verbunden ist. Hierzu besitzt der Schenkel 12 ein Langloch 18, in welchem ein entsprechender Bolzen 19 des Schwenkarms 17 eingreift.

Auf Wunsch kann beispielsweise dem Griff 16 eine Arretierung zugeordnet sein, über welche die Zunge 7 in Offenlage gehalten wird. Ansonsten schliesst das Lager durch die gespeicherte Rückführenergie in der Zunge selbsttätig, wobei jedoch auch das Einlegen eines Warenbaumes bei geschlossener Position möglich ist, da die elastische Zunge 7 auch unter dem Druck eines in die Lagerschale 6 einzudrückenden Lagerzapfens 4 nachgibt.

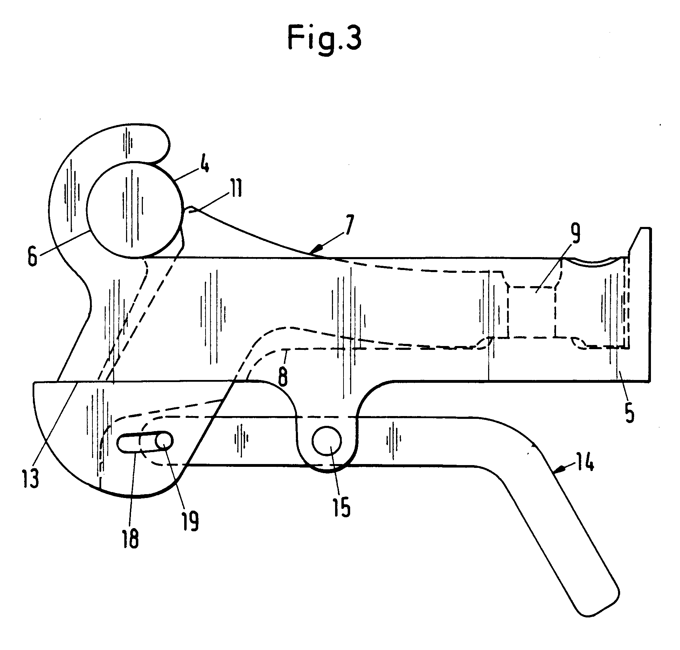

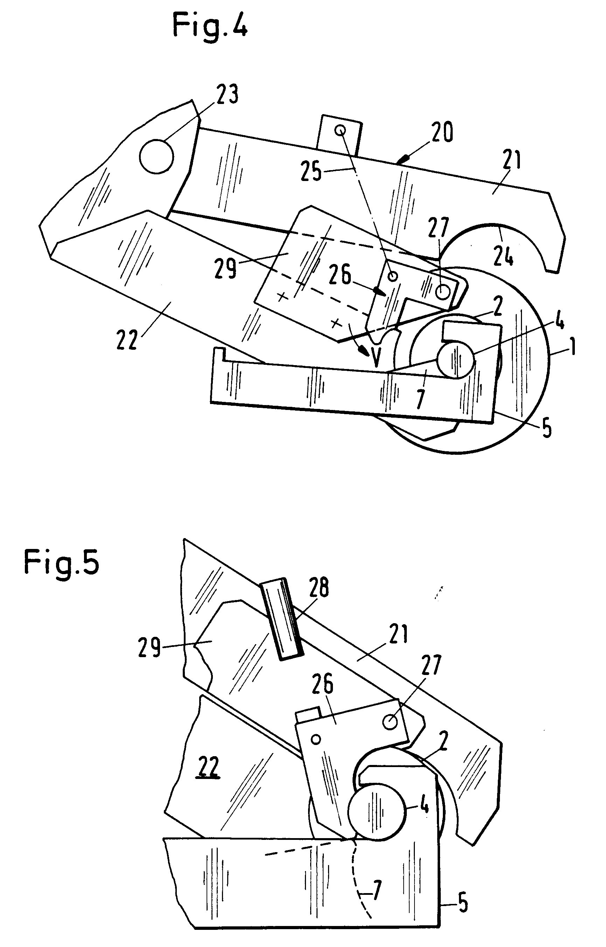

In Figur 3 sind die einzelnen Elemente dieses selbstschliessenden Warenbaumlagers naeher dargestellt. Besonders wirkungsvoll lässt sich die vorliegende Erfindung im Zusammenhang mit einer Entnahmevorrichtung 20 für den Warenbaum 2 anwenden, die in der EP-A-0 296 115 beschrieben ist. Eine derartige Entnahmevorrichtung 20 besteht gemäss Figur 4 aus zwei Greifern 21 und 22, wobei der Greifer 21 im Verhältnis zum Greifer 22 beweglich um einen Drehpunkt 23 ausgebildet ist. Beide Greifer 21 und 22 besitzen eine schalenförmige Ausnehmung 24, mit welcher sie in Schliesslage den Warenbaum 2 umfassen.

In dem in Figur 4 gezeigten Ausführungsbeispiel ist der obere Greifer 21 über einen nur strichpunktiert angedeuteten Hebelmechanismus 25 mit einem Finger 26 verbunden. Dieser Finger 26 besitzt eine Drehachse 27, welche in einer Platte 29 sitzt, die wiederum am unteren Greifer 22 befestigt ist. Beim Schliessen des beweglichen Greifers 21 wird der Finger 26 um die Drehachse 27 in Richtung v geschwenkt. Dabei trifft der Finger 26 auf die elastische Zunge 7 und drückt diese in den Lagertisch 5. Die Bewegung des Fingers 26 ist so gesteuert, dass die elastische Zunge 7 den Lagerzapfen 4 erst dann gänzlich freigibt, wenn die Greifer 21 und 22 den Warenbaum 2 fest umschliessen.

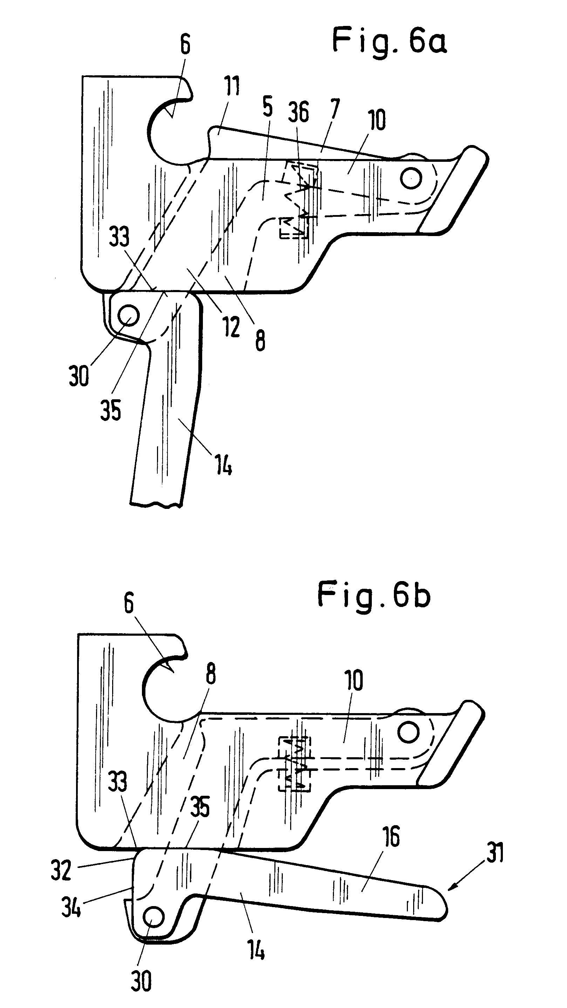

Die letztgenannte Entnahmeposition ist vor allem in Figur 5 dargestellt, wobei dort der Antrieb des Fingers 26 nicht über den Greifer 21, sondern getrennt davon gesteuert wird. Hierfür ist ein Druckzylinder 28 schematisch angedeutet.

In einem anderen Ausführungsbeispiel ist der Schenkel 10 nicht elastisch ausgebildet, sondern besitzt eine Feder 36, die sich einerseits am Schenkel 10 und andererseits am Lagertisch 5 abstützt. Der Hebel 14 kann, wie in den Fig. 6a und 6b gezeigt, auch ohne Drehpunkt am Lagertisch 5 ausgebildet sein. In diesem Fall besitzt er zwischen dem Anlenkpunkt 30 an der Zunge und dem Angriffspunkt 31 zu seiner Betätigung eine gekrümmte Partie 32, mit der er sich unten am Lagertisch abstützen kann. Die gekrümmte Partie 32 des Hebels ist einer geraden Partie 33 des Lagertisches zugeordnet, und am Hebel 14 sind vor und hinter der gekrümmten Partie 32 je eine gerade Auflagezone 34,35 des Hebels für die gerade Partie 33 an der Unterseite des Lagertisches, so dass bei Verschwenken des Hebels 14 von der Verriegelungslage V in die Entriegelungslage E bzw. umgekehrt dieser jeweils von einer Ruhelage über eine Totpunktlage in eine zweite Ruhelage gelangt, wobei zwischen der geraden Partie 33 auf der Unterseite des Lagertisches und der gekrümmten Partie 32 jeweils an einem Punkt Kontakt besteht.

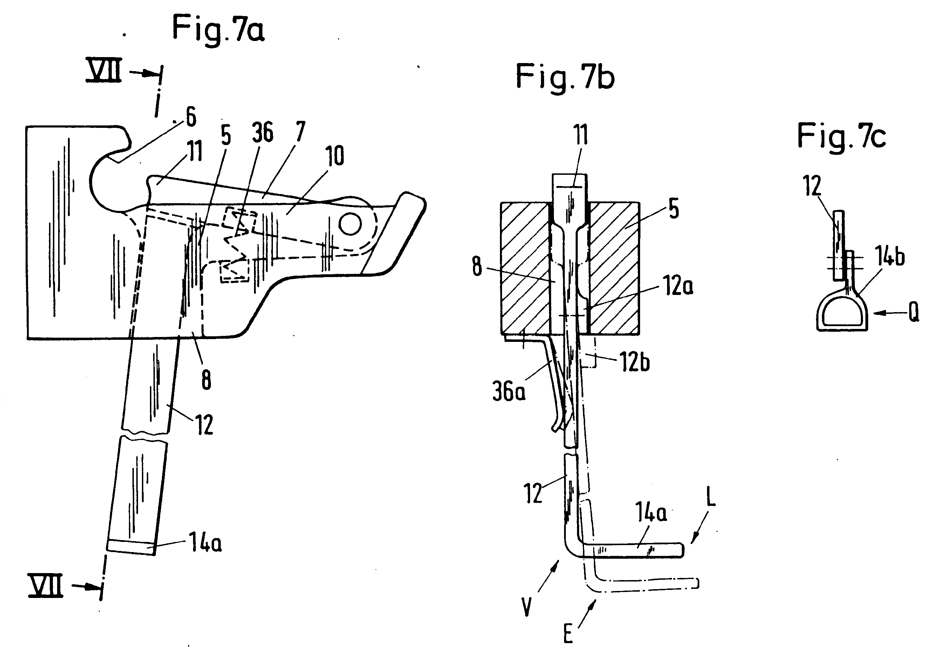

Gemäss Fig. 7a ist der Schenkel 10, der zweite Schenkel 12 und ein an diesem befestigtes Pedal 14a als ein in sich zusammenhängendes Bauteil ausgeführt, welches über das Pedal 14a von einer Bedienungsperson betätigt werden kann. Um das Knie 11 in die Entriegelungslage zu bringen, muss eine Kraft, die durch die Betriebsperson mit dem Fuss aufgebracht wird, am Pedal 14a wirken, damit das Knie nach unten in die Ausnehmung 8 verschwinden kann. Der zweite Schenkel 12 gelangt dabei, wie in Fig. 7b dargestellt, von der Verriegelungslage V in die strichpunktierte Entriegelungslage E. Dabei gerät eine seitlich am zweiten Schenkel 12 befestigte Nase 12a in den Bereich unterhalb der Ausnehmung 8 in eine Lage in der sich die Nase 12b unter der Wirkung eines zweiten Federelementes 36a mit dem zweiten Schenkel 12 etwas nach rechts verschiebt. Dabei sitzt die Oberseite der Nase 12b am unteren Rand der Ausnehmung 8 auf und verhindert das Zurückschwenken der Zunge 7 aus der Entriegelungslage E in die Verriegelungslage V. Nach dem Warenbaumwechsel kann das Knie 11 mit der Zunge 7 und dem zweiten Schenkel 12 wieder in die obere Verriegelungslage V gebracht werden, wenn eine Kraft entgegen der Wirkung des zweiten Federelementes 36a nach links am Pedal 14a oder am zweiten Schenkel 12 aufgebracht wird. Hierzu genügt beispielsweise eine vergleichsweise geringe Fusskraft am Pedal 14a in Richtung des Pfeiles L in Fig. 7b.

In Fig. 7c ist eine weitere Ausführungsart des Pedals 14b gezeigt. Am zweiten Schenkel 12 ist unten ein Bauelement in Form eines Steigbügels als Pedal 14b in zweiter Ausführungsform befestigt. Der Vorteil dieser Ausführungsart liegt darin, dass der zweite Schenkel 12 quer zu seiner Längserstreckung in der Zeichenebene der Fig. 7c relativ biegeweich ausgeführt werden kann, da die Fusskraft am Pedal 14b kein Biegemoment in dem zweiten Schenkel 12 einleitet, wodurch das zweite Federelement 36a schwach ausgeführt werden kann und die Querkraft zur Entriegelung der Nase 12b in Richtung des Pfeiles Q am Pedal 14b ebenfalls gering bleibt.

**Patentansprüche**

1. Webmaschine mit einem Warenbaum (2) zum Aufwickeln des gewebten Tuches, wobei der Warenbaum Lagerzapfen (4) aufweist, welche von Lagerschalen (6) in Lagertischen (5) der Webmaschine aufgenommen und durch je ein Riegelelement in den Lagerschalen gesichert sind, dadurch **gekennzeichnet**, dass das Riegelelement aus einer Zunge (7) mit einer Feder (10,36) zur Anhebung der Zunge besteht, und dass die Zunge (7) zwei Schenkel (10,12) aufweist, wobei die Zunge am Ende eines Schenkels (10) einerseits in einer schlitzförmigen Ausnehmung (8) des Lagertisches (5) gelagert ist, unter Bildung eines Knies (11) bei der Lagerschale (6) nach oben aus der Ausnehmung (8) herausragt und vom Knie (11) aus in den anderen Schenkel (12) übergeht, der durch den Lagertisch (5) nach unten verläuft und den Lagertisch (5) mit einer Auflagefläche (13) unterfängt.

2. Webmaschine nach Anspruch 1, dadurch gekennzeichnet, dass am Ende des anderen Schenkels ein Hebel (14) zum Verriegeln bzw. Entriegeln des Lagerzapfens (4) der Lagerschale angelenkt ist.

3. Webmaschine nach Anspruch 1, dadurch gekennzeichnet, dass ein Schenkel (10) von einer Feder (36) unterstützt ist.

4. Webmaschine nach Anspruch 3, dadurch gekennzeichnet, dass der eine Schenkel (10) elastisch verformbar gestaltet ist und an seinem Ende starr mit dem Lagertisch verbunden ist.

5. Webmaschine nach Anspruch 3, dadurch gekennzeichnet, dass zwischen Zunge und Lagertisch ein elastisch verformbares Element, z.B. eine Feder (36) eingesetzt ist.

6. Webmaschine nach Anspruch 2, dadurch gekennzeichnet, dass der Hebel zwischen dem Anlenkpunkt (30) an der Zunge und dem Angriffspunkt (31) zu seiner Betätigung eine gekrümmte Partie (32) aufweist, mit der er sich unten am Lagertisch abstützen kann.

7. Webmaschine nach Anspruch 6, dadurch gekennzeichnet, dass die gekrümmte Partie (32) des Hebels einer geraden Partie (33) des Lagertisches (5) zugeordnet ist und dass am Hebel (14) vor und hinter der gekrümmten Partie (32) je eine gerade Auflagezone (34,35) des Hebels für die gerade Partie (33) an der Unterseite des Lagertisches vorgesehen ist, so dass bei Verschwenken des Hebels (14) von der Verriegelungslage

(V) in die Entriegelungslage (E) bzw. umgekehrt dieser jeweils von einer Ruhelage über eine Totpunktlage in eine zweite Ruhelage gelangt, wobei zwischen der geraden Partie (33) auf der Unterseite des Lagertisches und der gekrümmten Partie (32) jeweils an einem Punkt Kontakt besteht.

8. Webmaschine nach Anspruch 2, dadurch gekennzeichnet, dass der Hebel (14) mit dem Lagertisch (5) einen Drehpunkt (15) ausbildet.

9. Webmaschine nach Anspruch 8, dadurch gekennzeichnet, dass einerseits des Drehpunktes (15) der Hebel (14) über einen Schwenkarm (17) mit dem Schenkel (12) verbunden ist und andererseits einen Griff (16) aufweist.

10. Webmaschine nach Anspruch 1, dadurch gekennzeichnet, dass der Zunge (7) ein Finger (26) zugeordnet ist, welcher die Zunge (7) in die Ausnehmung (8) drückt.

11. Webmaschine nach Anspruch 11, dadurch gekennzeichnet, dass der Finger (26) in Abhängigkeit von der Bewegung einer Entnahmevorrichtung (20) für den Warenbaum (2) steht.

12. Webmaschine nach Anspruch 11, dadurch gekennzeichnet, dass der Finger (26) mit einem Greifer (22) der Entnahmevorrichtung (20) verbunden ist und in Abhängigkeit von der Bewegung des anderen Greifers (21) gegen die Zunge (7) versetzbar ist.

13. Webmaschine nach Anspruch 11, dadurch gekennzeichnet, dass der Finger (26) einen eigenen Antrieb (28) aufweist.

14. Webmaschine nach Anspruch 1, dadurch gekennzeichnet, dass unten am zweiten Schenkel (12) ein Pedal (14a,14b) angebracht ist, und dass im Bereich der Ausnehmung (8) eine Nase (12a) am zweiten Schenkel (12) befestigt ist, welche gegen die Unterseite des Lagertisches (5) formschlüssig verriegelbar ausgebildet ist.

**Claims**

1. A weaving machine comprising a cloth beam (2) for rolling up the woven cloth, the cloth beam having journals (4) which are accommodated by bearing bushes (6) in bearing blocks (5) of the weaving machine and are each secured in the bushes by a locking element, characterised in that the locking element consists of a tongue (7) with a spring (10, 36) to lift the tongue, and in that the tongue (7) comprises two limbs (10, 12), at the end of one limb (10) the tongue is mounted at one end in a recess (8) in the form of a slot in the bearing block (5), projects upwardly out of the recess (8) to form a knee (11) at the bearing bush (6) and merges from the knee (11) into the other limb (12) which extends down through the bearing block (5) and engages beneath the bearing block (5) by a contact surface (13).

2. A weaving machine according to claim 1, characterised in that a lever (14) for locking and unlocking the journal (4) of the bearing bush is articulated at the end of the other limb.

3. A weaving machine according to claim 1, characterised in that one limb (10) is supported by a spring (36).

4. A weaving machine according to claim 3, characterised in that one limb (10) is elastically deformable and is rigidly connected to the bearing block at its end.

5. A weaving machine according to claim 3, characterised in that an elastically deformable element, e.g. a spring (36), is inserted between the tongue and bearing block.

6. A weaving machine according to claim 2, characterised in that between the point of articulation (30) on the tongue and the point of application (31) for its actuation, the lever comprises a curved part (32) by which it can bear against the bottom of the bearing block.

7. A weaving machine according to claim 6, characterised in that the curved part (32) of the lever is associated with a straight part (33) of the bearing block (5) and in that in front of and behind the curved part (32) the lever (14) has in each case a straight contact zone (34, 35) for the straight part (33) on the bottom of the bearing block, so that when the lever (14) is pivoted from the locking position (V) into the unlocking position (E) and vice-versa it passes in each case from a position of rest via a dead-centre position into a second position of rest, in which there is in each case contact at one point between the straight part (33) on the bottom of the bearing block and the curved part (32).

8. A weaving machine according to claim 2, characterised in that the lever (14) forms a fulcrum (15) with the bearing block (5).

9. A weaving machine according to claim 8, characterised in that the fulcrum (15) of the lever (14) is on the one hand connected to the limb (12) via a pivot arm (17) and on the other hand has a handle (16).

10. A weaving machine according to claim 1, characterised in that a finger (26) is associated with the tongue (7) and presses it into the recess (8).

11. A weaving machine according to claim 11, characterised in that the finger (22) is dependent on the movement of an extraction device (20) for the cloth beam (2).

12. A weaving machine according to claim 11, characterised in that the finger (26) is connected to a gripper (22) of the extraction device (20) and is adapted to be set against the tongue (7) in dependence on the movement of the other gripper (21).

13. A weaving machine according to claim 11, characterised in that the finger (26) has its own drive (28).

14. A weaving machine according to claim 1, characterised in that a pedal (14a, 14b) is disposed at the bottom of the second limb (12) and in that a nose (12a) is secured to the second limb (12) in the region of the recess (8) and is positively lockable against the underside of the bearing block (5).

**Revendications**

1. Machine à tisser comprenant une ensouple de tissu (2) pour l'enroulement de la toile tissée, l'ensouple de tissu comprenant des tourillons (4) logés dans des coussinets (6) situés dans des tables de support (5) de la machine à tisser et chacun d'eux étant retenu par un élément de verrouillage dans les coussinets, caractérisée en ce que l'élément de verrouillage se compose d'une lame (7) et d'un ressort (10, 36) de relèvement de la lame et en ce que la lame (7) comprend deux branches (10, 12), la lame étant montée d'un côté, à l'extrémité d'une branche (10), dans un évidement (8) en forme de fente de la table de support (5), ressortant vers le haut de l'évidement (8) en formant un coude (11) en face du coussinet (6) et se prolongeant à partir du coude (11) en l'autre branche (12) qui descend à travers la table de support (5) et dont une surface d'appui (13) se plaque sous la table de support (5).

2. Machine à tisser selon la revendication 1, caractérisée en ce qu'un levier (14) de verrouillage du tourillon (4) dans le coussinet ou de déverrouillage de ce tourillon est articulé sur l'extrémité de l'autre branche.

3. Machine à tisser selon la revendication 1, caractérisée en ce qu'une branche (10) est supportée par un ressort (36).

4. Machine à tisser selon la revendication 3, caractérisée en ce que l'une (10) des branches est réalisée de manière à être déformable élastiquement et son extrémité est solidarisée avec la table de support.

5. Machine à tisser selon la revendication 3, caractérisée en ce qu'un élément déformable élastiquement par exemple un ressort (36), est monté entre la lame et la table de support.

6. Machine à tisser selon la revendication 2, caractérisée en ce que le levier comprend pour son actionnement une partie courbe (32) qui est située entre le point d'articulation (30) sur la lame et le point d'attaque (31) et par laquelle il peut prendre appui sur la surface inférieure de la table de support.

7. Machine à tisser selon la revendication 6, caractérisée en ce que la partie courbe (32) du levier est associée à une partie rectiligne (33) de la table de support (5) et en ce qu'une zone rectiligne (34, 35) est prévue sur le levier (14) devant et derrière la partie courbe (32) pour l'appui respectif du levier contre la partie rectiligne (33) du côté inférieur de la table de support, de manière que, lors du basculement du levier (14) de la position de verrouillage (V) à la position de déverrouillage (E) ou inversement, il parvienne dans chaque cas d'une position de repos à une seconde position de repos en passant par une position de point mort, un contact ponctuel existant entre la partie rectiligne (33) du côté inférieur de la table de support et la partie courbe (32).

8. Machine à tisser selon la revendication 2, caractérisée en ce qu'un point d'appui (15) est réalisé pour le levier (14) sur la table de support (5).

9. Machine à tisser selon la revendication 8, caractérisée en ce que le levier (14) est relié d'un côté du point d'appui (15) par un bras orientable (17) à la branche (12) et comporte de l'autre côté une poignée (16).

10. Machine à tisser selon la revendication 1, caractérisée en ce qu'un doigt (26) associé à la lame (7) repousse la lame (7) dans l'évidement (8).

11. Machine à tisser selon la revendication 11, caractérisée en ce que le doigt (26) est sous la dépendance du mouvement d'un dispositif (20) d'enlèvement de l'ensouple de tissu (2).

12. Machine à tisser selon la revendication 11, caractérisée en ce que le doigt (26) est relié à un grappin (22) du dispositif d'enlèvement (20) et il est déplaçable vers la lame (7) en fonction du mouvement de l'autre grappin (21).

13. Machine à tisser selon la revendication 11, caractérisée en ce que le doigt (26) comprend sa propre commande (28).

14. Machine à tisser selon la revendication 1, caractérisée en ce qu'une pédale (14a, 14b) est montée au bas de la seconde branche (12) et en ce qu'un talon (12a), qui est fixé sur la seconde branche (12) au voisinage de l'évidement (8), est conformé de manière à être verrouillable par complémentarité de formes contre le côté inférieur de la table de support (5).

EP 0 387 189 B1

## Fig.1

## Fig.2

# Fig.3

# Fig.4

# Fig.5

# Fig. 6a

# Fig.6b

Fig.7a

Fig.7b

Fig.7c

EP 0 387 189 B1